# EUROPEAN PATENT APPLICATION

(11) **EP 3 845 059 A1**
(43) Date of publication of application: **07.07.2021**
(21) Application number: 21158393.5
(22) Date of filing: 13.01.2018
(51) Int. Cl.: A01G 31/02, A01G 25/16

(54) **MANIFOLD FOR HYDROPONICS SYSTEM AND METHODS FOR SAME**

(30) Priority: 13.01.2017 US 201762446021 P
(62) Divisional of application: 18738465.6
(71) Applicant: HGCI, Inc., Las Vegas, NV 89169 (US)
(72) Inventor: SLEMMER, Douglas, Boulder, CO 80304 (US)
(74) Representative: Beyer, Andreas

(57) **Abstract**

A manifold (18) for a hydroponic system comprises a main body (28), an inlet port (30), an outlet port (32), and an electrical conductivity probe (48). The main body (28) defines a dosing chamber (34) and comprises at least one dosing port (36) in fluid communication with the dosing chamber (34). The at least one dosing port is configured to facilitate introduction of dosing fluid to the dosing chamber (34). The inlet port (30) is coupled with the main body (28) and is in fluid communication with the dosing chamber (34). The outlet port (32) is coupled with the main body (28) and is in fluid communication with the dosing chamber (34). The electrical conductivity probe (48) is coupled with the main body (28) and extends into the dosing chamber (34) downstream of the at least one dosing port. The electrical conductivity probe (48) is configured to detect an electrical conductivity of a hydroponic fluid contained in the dosing chamber (34). A hydroponic system (10) and a method are also provided.

## Description

### REFERENCE TO RELATED APPLICATION

This application claims priority of U.S. provisional patent application Serial No. 62/446,021, entitled Smart Hydroponics System, filed January 13, 2017, and hereby incorporates this provisional patent application by reference herein in its entirety.

### TECHNICAL FIELD

The apparatus and methods described below generally relate to a hydroponics system that includes a manifold. The manifold can include an electrical conductivity probe for detecting the electrical conductivity of hydroponic fluid.

### BACKGROUND

Conventional hydroponic systems are oftentimes associated with dosing systems that supply dosing fluid to the hydroponic system to encourage the health and growth of associated vegetation.

### SUMMARY

In accordance with one embodiment, a manifold for a hydroponic system is provided. The manifold comprises a main body, an inlet port, an outlet port, and an electrical conductivity probe. The main body defines a dosing chamber and comprises at least one dosing port in fluid communication with the dosing chamber. The at least one dosing port is configured to facilitate introduction of dosing fluid to the dosing chamber. The inlet port is coupled with the main body and is in fluid communication with the dosing chamber. The outlet port is coupled with the main body and is in fluid communication with the dosing chamber. The electrical conductivity probe is coupled with the main body and extends into the dosing chamber downstream of the at least one dosing port. The electrical conductivity probe is configured to detect an electrical conductivity of a hydroponic fluid contained in the dosing chamber.

In accordance with another embodiment, a hydroponic system comprises a manifold and a reservoir. The manifold comprises a main body, an inlet port, an outlet port, and an electrical conductivity probe. The main body defines a dosing chamber and comprises a first dosing port in fluid communication with the dosing chamber. The first dosing port is configured to facilitate introduction of a first fluid to the dosing chamber. The inlet port is coupled with the main body and is in fluid communication with the dosing chamber. The outlet port is coupled with the main body and in fluid communication with the dosing chamber. The electrical conductivity probe is coupled with the main body and extends into the dosing chamber downstream of the first dosing port. The electrical conductivity probe is configured to detect an electrical conductivity of a hydroponic fluid contained in the dosing chamber. The reservoir is in fluid communication with the inlet port and the outlet port.

In accordance with yet another embodiment, a method for monitoring dosing of a hydroponic fluid with a dosing fluid is provided. The method comprises activating a circulation pump to facilitate circulation of hydroponic fluid from a reservoir, through a manifold and back to the reservoir, the manifold comprising a main body defining a dosing chamber and comprising a first dosing port in fluid communication with the dosing chamber, and activating a first pump that is in fluid communication with a first dosing source to facilitate dispensation of a first dosing fluid from the first dosing source, through the first dosing port and into the dosing chamber. The method further comprises detecting a presence of the first dosing fluid in the hydroponic fluid with an electrical conductivity probe that extends into the dosing chamber downstream of the first dosing port. The method further comprises, when the first dosing fluid is absent from the hydroponic fluid, performing one or more of the following: activating the first pump again to facilitate dispensation of the first dosing fluid from the first dosing source, through the first dosing port and into the dosing chamber and notifying a user of an abnormal condition with the first dosing source.

### BRIEF DESCRIPTION OF THE DRAWINGS

Various embodiments will become better understood with regard to the following description, appended claims and accompanying drawings wherein:

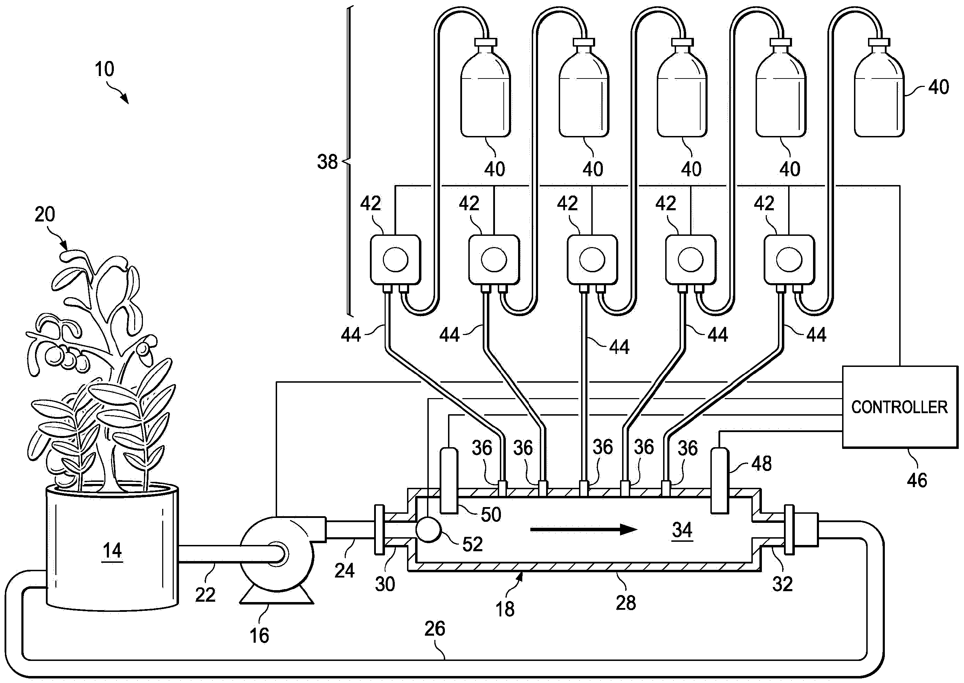

FIG. 1 is a schematic view depicting a hydroponic system in association with a dosing system, in accordance with one embodiment.

### DETAILED DESCRIPTION

Embodiments are hereinafter described in detail in connection with the view and example of FIG. 1, wherein like numbers indicate the same or corresponding elements throughout the views. As illustrated in FIG. 1, a hydroponic system 10 can include a reservoir 14, a circulation pump 16, and a manifold 18. The reservoir 14 can contain hydroponic fluid into which a root system (not shown) of vegetation 20 (e.g., plants) can be at least partially immersed to provide nutrients to the root system. The reservoir 14 can be in fluid communication with the circulation pump 16 via a conduit 22, the circulation pump 16 can be in fluid communication with the manifold 18 via a conduit 24, and the manifold 18 can be in fluid communication with the reservoir 14 via a conduit 26. The circulation pump 16 can be selectively operable to circulate hydroponic fluid from the reservoir 14, through the manifold 18 and back to the reservoir 14.

The manifold 18 can include a main body 28, an inlet port 30, and an outlet port 32. The main body 28 can define a dosing chamber 34. In one embodiment, the manifold 18 can be formed of metal, such as stainless steel, but in other embodiments, the manifold 18 can be formed of a thermoplastic or other suitable material. The inlet and outlet ports 30, 32 can be coupled with the main body 28 and in fluid communication with the dosing chamber 34. The inlet port 30 can be fluidically coupled with the conduit 24, and the outlet port 32 can be fluidically coupled with the conduit 26 such that the dosing chamber 34 is in fluid communication with each of the circulation pump 16 and the reservoir 14.

The manifold 18 can also include a plurality of dosing ports 36 that are in fluid communication with the dosing chamber 34 and configured to facilitate introduction of dosing fluid into the dosing chamber 34. A dosing system 38 can be associated with the hydroponic system 10 and configured to dispense dosing fluid to the dosing ports 36 for introduction into the dosing chamber 34. The dosing system 38 can include a plurality of dosing containers 40 (e.g., dosing sources). Each of the dosing containers 40 can contain a different dosing fluid which can be any of a variety of fluids or solutions that promote the health and/or growth of the vegetation 20 in the hydroponic fluid. In one embodiment, each of the dosing fluids can comprise a nitrogen/phosphorus/potassium (NPK solution), a calcium nitrate solution, a magnesium sulfate solution, an acidic solution (for increasing the pH of the hydroponic fluid), and a basic solution (for decreasing the pH of the hydroponic solution). In some embodiments, the type of dosing fluids contained in the dosing containers 40 can be specific to the type of vegetation (e.g., 20) being grown in the reservoir 14.

The dosing containers 40 can be in fluid communication with respective pumps 42. Each of the pumps 42 can be in fluid communication with one of the dosing ports 36 via respective conduits 44 and configured to facilitate selective pumping of dosing fluid from the associated dosing container 40 and into the dosing chamber 34 via one of the dosing ports 36. The pumps 42 can be in electrical communication with a controller 46 that facilitates selective and individual operation of the pumps 42.

It is to be appreciated that, throughout the life of the vegetation, the nutrients in the hydroponic fluid can become depleted and/or the pH level of the hydroponic fluid can fall outside of a desired range, which can adversely affect the growth and health of the vegetation. When that happens, the controller 46 can actuate the pumps 42 to facilitate dispensation of an amount of the dosing fluid(s) from one of the dosing containers 40 to increase the nutrient levels and/or to bring the pH level within the desired range.

The manifold 18 can include an electrical conductivity (EC) probe 48 and a pH probe 50 that are each coupled with the main body 28 of the manifold 18 and at least partially extend into the dosing chamber 34. The EC probe 48 can be located downstream of the dosing ports 36 and configured to detect an electrical conductivity of the hydroponic fluid which can be an indicator of the nutrient levels in the hydroponic fluid. The pH probe 50 can be located upstream of the dosing ports 36 and configured to detect the pH level of the hydroponic fluid. Each of the EC probe 48 and the pH probe 50 can be in communication with the controller 46, which can be configured to facilitate display of the current EC level and pH level from the EC probe 48 and the pH probe 50, respectively, to a user. In one embodiment, a graphical display (not shown) can be associated with the controller 46 and can display the current EC level and pH level (e.g., in real time or substantially in real time) to a user. In another embodiment, a remote computing device (not shown) such as a smartphone can be in wired or wireless communication with the controller 46. The computing device can have an application running thereon that facilitates display of the current EC level and pH level to the user (e.g., in a graphical user interface).

When the current EC level and/or pH level is outside of a desired range, the user can initiate dosing of the hydroponic fluid with the dosing fluid(s) from one or more of the dosing containers 40 to bring the nutrient levels and/or pH level within range. In one embodiment, the controller 46 can be associated with an input device (such as a keyboard and mouse) that allows the user to enter the desired amount and types of dosing fluids that are to be dispensed from the one or more dosing containers 40. In another embodiment, the application running on the remote computing device (e.g., smartphone) described above can display an input screen that allows the user to enter the desired amount and types of dosing fluids that are to be dispensed from the one or more dosing containers 40. In either embodiment, the user can select the particular type of dosing fluid(s) to be dispensed to the dosing chamber 34 (i.e., a nutrient solution or a pH varying solution) as well as the amount desired to be dispensed.

Once the user has entered the desired amount and types of dosing fluids, the controller 46 can actuate the appropriate pumps 42 based on the user's inputs to dispense the requested amount and types of dosing fluid(s) to the dosing chamber 34. The dosing fluid(s) dispensed into the dosing chamber 34 can be transferred from the manifold 18 (e.g., out of the outlet port 32) to the reservoir 14 by the circulation pump 16. The circulation pump 16 can continue to circulate the hydroponic fluid which can result in mixing of the dosing fluid(s) within the reservoir 14. After the dosing fluid(s) have been thoroughly mixed into the hydroponic fluid, the user can evaluate the current EC level and pH level (e.g., from the associated display). If the EC level and/or pH level is/are still not within the desired ranges, the user can initiate dosing of the hydroponic fluid again with more dosing fluid(s). The user can repeat this process until both the EC level and pH level are within a desired range.

Since the pH probe 50 is located upstream of the dosing ports 36, the flow of the hydroponic fluid through the manifold 18 carries the dosing fluid away from the pH probe 50. The pH probe 50 is therefore less susceptible to direct exposure to the concentrated amounts of dosing fluid which can prolong the overall life of the pH probe 50.

It is to be appreciated that when dosing fluid is dispensed into the dosing chamber 34, the concentration of dosing fluid can cause the EC level of the hydroponic fluid in the dosing chamber 34 to increase significantly. Since the EC probe 48 is located downstream of the dosing ports 36, the flow of the hydroponic fluid through the manifold 18 can carry the hydroponic fluid across the EC probe 48 thereby enabling the controller 46 to detect the significant increase in the EC level with the EC probe 48 to thereby detect the presence of the dosing fluid in dosing chamber 34. Occasionally, there may be an abnormal condition, such as an unprimed pump 42, an unprimed conduit 44, or an empty dosing container 40, that can cause insufficient dosing fluid (e.g., no dosing fluid) to be dispensed into the dosing chamber 34. As such, the controller 46 can be configured to detect the presence of the dosing fluid in the dosing chamber 34 (as a function of an increase in the EC level of the hydroponic fluid) after any of the pumps 42 are activated. If the EC level of the hydroponic fluid does not indicate the presence (or a sufficient presence) of the dosing fluid, the controller 46 can initiate operation of the pump 42 associated with the abnormal condition again, for a predetermined amount of time, to facilitate priming of the pump 42 and the unprimed conduit 44. If the controller 46 still does not detect the presence of the dosing fluid in the dosing chamber 34 (as a function of an increase in the EC level of the hydroponic fluid), a notification can be sent to the user indicating that one of the dosing containers 40 is empty and should be replaced.

An example method of detecting an abnormal condition and notifying a user with the controller 46 will now be discussed. First, the hydroponic system 10 can detect and display the current EC level and pH level to a user. When one or more of the EC level and pH level is outside of a desired range, the user can initiate dosing of the hydroponic fluid with one or more of the dosing fluids stored in the dosing containers 40. In response, the controller 46 can initiate activation of a first one of the pumps 42. The controller 46 can detect whether the dosing fluid is present in the dosing chamber 34 with the EC probe 48. If the dosing fluid is present in the dosing chamber 34, the controller 46 can then determine whether other pumps 42 should be activated based on the dosing fluids requested by the user. If there are still pumps 42 that should be activated, the controller 42 activates one of those pumps 42 and detects for the presence of that dosing fluid. If there are no pumps 42 remaining to be activated, then the process is complete. If the dosing fluid is not present (or an insufficient amount of dosing fluid is present) after activation of the first one of the pumps 42, the controller 46 can activate the first one of the pumps 42 for a predetermined amount of time to facilitate priming of the pump 42 and the associated conduit 34. If dosing fluid is still not present in the dosing chamber 34, the controller 46 can notify the user that the fluid container 40 is empty and needs to be replaced or can notify the user of some other abnormality in the dosing system 38 that is causing improper dispensation of the dosing fluid. The controller 46 can then determine whether other pumps 42 should be activated based on the dosing fluids requested by the user. If there are still pumps 42 that should be activated, the controller 42 activates one of those pumps 42 and detects for the presence of that dosing fluid. If there are no pumps 42 remaining to be activated, then the process is complete. It is to be appreciated that the controller 46 can activate each pump 42 individually and can detect the presence of the dosing fluid from that pump 42 to be able to identify the specific dosing container 40 that is empty or other abnormal condition relative that specific dosing container 40 and/or pump 42.

In one embodiment, the EC probe 48 can be configured to detect a temperature of the hydroponic fluid. If the temperature of the hydroponic fluid is outside of a desired range, the controller 46 can notify the user to allow the user to adjust the temperature of the hydroponic fluid accordingly.

The manifold 18 can also include a flow sensor 52 that is associated with the inlet port 30 and configured to detect the flow of hydroponic fluid through the inlet port 30. The flow sensor 52 can be in communication with the controller 46. When the circulation pump 16 is activated, the controller 46 can monitor the circulation of fluid using the flow sensor 52. If the fluid flow through the inlet port 30 is insufficient, the controller 46 can notify the user that there is an abnormal condition with the fluid flow that should be addressed.

The foregoing description of embodiments and examples has been presented for purposes of illustration and description. It is not intended to be exhaustive or limiting to the forms described. Numerous modifications are possible in light of the above teachings. Some of those modifications have been discussed and others will be understood by those skilled in the art. The embodiments were chosen and described for illustration of various embodiments. The scope is, of course, not limited to the examples or embodiments set forth herein, but can be employed in any number of applications and equivalent devices by those of ordinary skill in the art. Rather, it is hereby intended that the scope be defined by the claims appended hereto. Also, for any methods claimed and/or described, regardless of whether the method is described in conjunction with a flow diagram, it should be understood that unless otherwise specified or required by context, any explicit or implicit ordering of steps performed in the execution of a method does not imply that those steps must be performed in the order presented and may be performed in a different order or in parallel.

The invention discloses, in addition to the previous description and the appended claims 1-17, following embodiments:
Embodiment 1: A manifold for a hydroponic system, the manifold comprising:
   a main body defining a dosing chamber and comprising at least one dosing port in fluid communication with the dosing chamber, the at least one dosing port configured to facilitate introduction of dosing fluid to the dosing chamber;
   an inlet port coupled with the main body and in fluid communication with the dosing chamber;
   an outlet port coupled with the main body and in fluid communication with the dosing chamber; and
   an electrical conductivity probe coupled with the main body and extending into the dosing chamber downstream of the at least one dosing port, the electrical conductivity probe being configured to detect an electrical conductivity of a hydroponic fluid contained in the dosing chamber.
Embodiment 2: The manifold of embodiment 1 further comprising a pH probe coupled with the main body and extending into the dosing chamber upstream of the at least one dosing port. Embodiment 3: The manifold of embodiment 1 further comprising a flow sensor associated with the inlet port and configured to detect fluid flow through the inlet port.
Embodiment 4: The manifold of embodiment 1 wherein the at least one dosing port comprises five dosing ports.
Embodiment 5: The manifold of embodiment 4 further comprising a pH probe coupled with the main body and extending into the dosing chamber upstream of the five dosing ports such that the five dosing ports are interposed between the electrical conductivity probe and the pH probe. Embodiment 6: A hydroponic system comprising:
   a manifold comprising:
      a main body defining a dosing chamber and comprising a first dosing port in fluid communication with the dosing chamber, the first dosing port configured to facilitate introduction of a first fluid to the dosing chamber;
      an inlet port coupled with the main body and in fluid communication with the dosing chamber;
      an outlet port coupled with the main body and in fluid communication with the dosing chamber; and
      an electrical conductivity probe coupled with the main body and extending into the dosing chamber downstream of the first dosing port, the electrical conductivity probe being configured to detect an electrical conductivity of a hydroponic fluid contained in the dosing chamber; and
   a reservoir in fluid communication with the inlet port and the outlet port.
Embodiment 7: The hydroponic system of embodiment 6 further comprising a pH probe coupled with the main body and extending into the dosing chamber upstream of the first dosing port. Embodiment 8: The hydroponic system of embodiment 6 further comprising a flow sensor associated with the inlet port and configured to detect fluid flow through the inlet port. Embodiment 9: The hydroponic system of embodiment 6 wherein the main body further comprises a second dosing port in fluid communication with the dosing chamber, the second dosing port configured to facilitate introduction of a second fluid to the dosing chamber. Embodiment 10: The hydroponic system of embodiment 9 further comprising a pH probe coupled with the main body and extending into the dosing chamber upstream of the first dosing port and the second dosing port such that the first dosing port and the second dosing port are interposed between the electrical conductivity probe and the pH probe.
Embodiment 11: The hydroponic system of embodiment 6 further comprising a circulation pump fluidly coupled with the inlet port and the reservoir and configured to facilitate selective pumping of dosing fluid from the reservoir to the manifold.
Embodiment 12: The hydroponic system of embodiment 6 further comprising a first dosing source in fluid communication with the first dosing port.
Embodiment 13: The hydroponic system of embodiment 12 further comprising a first pump in fluid communication with the first dosing source and the first dosing port and configured to facilitate selective pumping of dosing fluid from the first dosing source through the first dosing port and into the dosing chamber.
Embodiment 14: The hydroponic system of embodiment 13 wherein:
   the main body further comprises a second dosing port in fluid communication with the dosing chamber;
   the second dosing port is configured to facilitate introduction of a second fluid to the dosing chamber; and
   the hydroponic system further comprises a second pump in fluid communication with a second dosing source and the second dosing port and configured to facilitate selective pumping of a second dosing fluid from the second dosing source through the second dosing port and into the dosing chamber.
Embodiment 15: A method for monitoring dosing of a hydroponic fluid with a dosing fluid, the method comprising:
   activating a circulation pump to facilitate circulation of hydroponic fluid from a reservoir, through a manifold and back to the reservoir, the manifold comprising a main body defining a dosing chamber and comprising a first dosing port in fluid communication with the dosing chamber;
   activating a first pump that is in fluid communication with a first dosing source to facilitate dispensation of a first dosing fluid from the first dosing source, through the first dosing port and into the dosing chamber;
   detecting a presence of the first dosing fluid in the hydroponic fluid with an electrical conductivity probe that extends into the dosing chamber downstream of the first dosing port;
   when the first dosing fluid is absent from the hydroponic fluid, performing one or more of the following:
      activating the first pump again to facilitate dispensation of the first dosing fluid from the first dosing source, through the first dosing port and into the dosing chamber; and
      notifying a user of an abnormal condition with the first dosing source. Embodiment 16: The method of embodiment 15 wherein detecting the presence of the first dosing fluid comprises detecting the presence of the first dosing fluid after a predefined period of time has elapsed after activating the first pump.
Embodiment 17: The method of embodiment 15 further comprising:
   detecting a pH level of the hydroponic fluid with a pH probe that extends into the dosing chamber upstream of the first dosing port; and
   when the pH level is outside of a predefined range, activating a second pump that is in fluid communication with a second dosing source to facilitate dispensation of a pH varying fluid from the second dosing source, through a second dosing port and into the dosing chamber. Embodiment 18: The method of embodiment 17 wherein the pH varying fluid comprises one of an acidic fluid and a basic fluid.
Embodiment 19: The method of embodiment 15 further comprising:
   detecting a temperature of the hydroponic fluid with the electrical conductivity probe; and
   notifying a user when the temperature is outside of a predefined temperature range. Embodiment 20: The method of embodiment 15 further comprising:
   detecting a flow rate of the hydroponic fluid with a flow sensor disposed at an inlet port of the manifold; and
   notifying a user when the flow rate is below a threshold value.

## Claims

1. A manifold (18) for a hydroponic system (10), the manifold (18) comprising:
a main body (28) defining a dosing chamber (34) and comprising at least one dosing port (36) in fluid communication with the dosing chamber (34), the at least one dosing port (36) configured to facilitate introduction of dosing fluid to the dosing chamber (34);
an inlet port (30) coupled with the main body (28) and in fluid communication with the dosing chamber (34);
an outlet port (32) coupled with the main body (28) and in fluid communication with the dosing chamber (34); and
an electrical conductivity probe (48) coupled with the main body (28) and extending into the dosing chamber (34) downstream of the at least one dosing port (36), the electrical conductivity probe (48) being configured to detect an electrical conductivity of a hydroponic fluid contained in the dosing chamber (34).

2. The manifold of claim 1 further comprising a pH probe (50) coupled with the main body (28) and extending into the dosing chamber (34) upstream of the at least one dosing port (36).

3. The manifold of claim 1 or 2 further comprising a flow sensor (52) associated with the inlet port (30) and configured to detect fluid flow through the inlet port (30).

4. The manifold of any of claims 1-3 wherein the at least one dosing port (36) comprises five dosing ports.

5. The manifold of claim 4 further comprising a pH probe (50) coupled with the main body and extending into the dosing chamber (34) upstream of the five dosing ports (36) such that the five dosing ports (36) are interposed between the electrical conductivity probe (48) and the pH probe (50).

6. A hydroponic system (10) comprising:
the manifold (18) of any of claims 1-5; and
a reservoir (14) in fluid communication with the inlet port (30) and the outlet port (32).

7. The hydroponic system (10) of claim 6 wherein the main body (28) comprises, as the at least one dosing port (36), a first dosing port (36) and a second dosing port, wherein the first dosing port (36) and the second dosing port are in fluid communication with the dosing chamber (34), the second dosing port configured to facilitate introduction of a second fluid to the dosing chamber (34).

8. The hydroponic system (10) of claim 7 further comprising a pH probe (50) coupled with the main body (28) and extending into the dosing chamber (34) upstream of the first dosing port (36) and the second dosing port such that the first dosing port and the second dosing port are interposed between the electrical conductivity probe (48) and the pH probe (50).

9. The hydroponic system (10) of claim 6 further comprising a circulation pump (16) fluidly coupled with the inlet port (30) and the reservoir (14) and configured to facilitate selective pumping of dosing fluid from the reservoir (14) to the manifold (18).

10. The hydroponic system (10) of claim 6 further comprising a first dosing source (40) in fluid communication with the first dosing port (36) and a first pump (42) in fluid communication with the first dosing source (40) and the first dosing port (36) and configured to facilitate selective pumping of dosing fluid from the first dosing source (40) through the first dosing port (36) and into the dosing chamber (34).

11. The hydroponic system (10) of claim 10 wherein:
the main body (28) further comprises a second dosing port in fluid communication with the dosing chamber (34);
the second dosing port is configured to facilitate introduction of a second fluid to the dosing chamber (34); and
the hydroponic system (10) further comprises a second pump in fluid communication with a second dosing source and the second dosing port and configured to facilitate selective pumping of a second dosing fluid from the second dosing source through the second dosing port and into the dosing chamber (34).

12. A method for monitoring dosing of a hydroponic fluid with a dosing fluid, the method comprising:
activating a circulation pump (16) to facilitate circulation of hydroponic fluid from a reservoir (14), through a manifold (18) and back to the reservoir (14), the manifold (18) comprising a main body (28) defining a dosing chamber (34) and comprising a first dosing port in fluid communication with the dosing chamber;
activating a first pump (42) that is in fluid communication with a first dosing source (40) to facilitate dispensation of a first dosing fluid from the first dosing source (40), through the first dosing port and into the dosing chamber (34);
detecting a presence of the first dosing fluid in the hydroponic fluid with an electrical conductivity probe (48) that extends into the dosing chamber (34) downstream of the first dosing port; when the first dosing fluid is absent from the hydroponic fluid, performing one or more of the following:
activating the first pump (42) again to facilitate dispensation of the first dosing fluid from the first dosing source, through the first dosing port and into the dosing chamber (34); and
notifying a user of an abnormal condition with the first dosing source.

13. The method of claim 12 wherein detecting the presence of the first dosing fluid comprises detecting the presence of the first dosing fluid after a predefined period of time has elapsed after activating the first pump (42) using a controller (46).

14. The method of claim 12 further comprising:
detecting a pH level of the hydroponic fluid with a pH probe (50) that extends into the dosing chamber (34) upstream of the first dosing port; and
when the pH level is outside of a predefined range, activating a second pump that is in fluid communication with a second dosing source to facilitate dispensation of a pH varying fluid from the second dosing source, through a second dosing port and into the dosing chamber.

15. The method of claim 14 wherein the pH varying fluid comprises one of an acidic fluid and a basic fluid.

16. The method of claim 12 wherein the electrical conductivity probe (48) is configured to detect a temperature of the hydroponic fluid, the method further comprising:
detecting the temperature of the hydroponic fluid with the electrical conductivity probe (48); and
notifying a user when the temperature is outside of a predefined temperature range.

17. The method of claim 12 further comprising:
detecting a flow rate of the hydroponic fluid with a flow sensor (52) disposed at an inlet port (30) of the manifold; and
notifying a user when the flow rate is below a threshold value.
